# EUROPEAN PATENT SPECIFICATION

(11) **EP 3 746 249 B1**
(45) Date of publication and mention of the grant of the patent: **14.10.2026**
(21) Application number: 19703494.5
(22) Date of filing: 15.01.2019
(51) Int. Cl.: B23K 9/095, B23K 9/10, B23K 9/12, B23K 9/14, B23K 9/167, B23K 9/173

(54) **SYSTEM AND METHOD FOR PROVIDING WELDING TYPE POWER ON MULTIPLE OUTPUTS**
SYSTEM UND METHODE ZUR BEREITSTELLUNG VON SCHWEISSSTROM AN MEHREREN AUSGÄNGEN
SYSTÈME ET MÉTHODE DE MISE À DISPOSITION DE COURANT DE SOUDAGE SUR PLUSIEURS SORTIES

(30) Priority: 30.01.2018 US 201815883148
(43) Date of publication of application: 09.12.2020
(73) Proprietor: Illinois Tool Works, Inc., Glenview, Illinois 60025 (US)
(72) Inventor: HENRY, Andrew J., Glenview, Illinois 60025 (US)
(74) Representative: HGF
(86) International application number: PCT/US2019/013581
(87) International publication number: WO 2019/152180

(56) References cited:
- EP-A2- 1 023 965
- EP-B1- 1 023 965
- WO-A1-2019/084113
- JP-A- S5 092 247
- JP-B2- S6 010 830
- US-A1- 2008 035 621

## Description

### FIELD OF THE INVENTION

The present disclosure relates generally to the art of providing welding type power. More specifically, it relates to providing welding type power across a shared output terminal and one of two or more output terminals.

### BACKGROUND OF THE INVENTION

Many applications exist for welding and cutting systems used to join two or more work pieces to one another, or to cut work pieces. These applications exist throughout industry, but also for construction, ship building, maintenance, and so forth. In arc welding systems, electrical power is converted to a form useful for a welding process, and the power provides voltage and current necessary to establish and maintain arcs between an electrode and a workpiece. Examples of welding processes include MIG (also called GMAW), TIG, stick (SMAW) , short-arc, subarc, and FCAW. MIG welding is performed by establishing an arc between an electrode (welding wire) that is advanced towards the workpiece and the workpiece itself. The electrode is often provided by a wire feeder, that is part of the welding-type system. The electrode is consumed insomuch as it is added to the weld as the weld puddle advances during the operation. TIG welding is performed by establishing an arc between a tungsten electrode that is not consumed by the welding process. Stick welding is performed by establishing an between a flux covered electrode that is consumed by the welding process. Stick and TIG welding can often be performed using the same cable. Some applications are best performed using a specific welding process, and other applications are best performed using other specific welding processes. Plasma cutting and similar operations also require conditioned power adapted for the specific process.

Some welding systems are designed to perform multiple processes and include a power circuit suited for providing an output for multiple processes. One such power circuit is described in US Patent Application 2014-0263240 (hereby incorporated by reference). That design includes a preregulator which provides a dc bus, followed by an inverter based output circuit. The preregulator conditions the input power, and provides a known dc bus. The inverter based output circuit receives the bus and provides the welding type power as a desired output for the selected process. A boost circuit is part of the preregulator, and the output circuit includes an inverter, transformer, rectifier and output inductor. Other examples of similar welding type power supplies are described in USP 6987242 (Geissler), USP 6115273 (Geissler) and Patent Publication 20090230941 (Vogel), all which are owned by the owner of this patent, and all of which are hereby incorporated by reference. Other welding type power supplies include additional stages, or use other topologies for each stage (such as a buck preregulator, a combined rectifier-boost preregulator, a chopper instead of or following the inverter, a second inverter following the first inverter, etc. These welding type systems are well suited for providing power for a variety of processes, from a variety of inputs.

Common multi process welding systems provide MIG and stick/TIG outputs. The MIG output is typically provided to a wire feeder on a MIG process output terminal, and the stick/TIG output is typically provided on a separate stick/TIG process output terminal. Process output terminal, as used herein, refers to an output terminal intended to be used for one or more particular processes, such as a MIG terminal, or a stick/tig terminal. The work output terminal is often a shared output terminal used when welding with either process. Shared output terminal, as used herein, refers to an output terminal ( or terminals that are electrically connected such that both receive the same power) used with more than one other output terminal and for multiple processes, such as a work terminal used with both a wire feeder terminal and a stick/tig terminal.

Some prior art multi process welders provide an output to both terminals, and rely on the user connecting to the proper terminal, and not having a connection on the other terminal because it receives power as well. This can be undesirable because an unused terminal is hot. Other multi process systems can use a shared process output terminal for multiple processes. This can be undesirable because it requires the user change what is connected to the terminal (a stick/TIG cable or a wire feeder) every time the process changes. Other multi process systems (such as the Miller ShopMaster) use a knife switch which the user throws to select which process output terminal is being used. This can be undesirable because it requires the user to take the extra step of setting the switch in the proper position.

Accordingly, a multi process welder that automatically provides the desired power to the correct process output terminal is desired.

Earlier patent documents US 2008/035621 A1, JP S50 92247 A, EP 1 023 965 A2 multi process welding systems:
US 2008/035621 A1, providing the basis for the preamble of claim 1, discloses a system and method that sets an output polarity based on a selected process. The system and method may be used to operate a variety of equipment, such as welders, cutters, tools and so forth. The system and method may include receiving an input signal and configuring circuitry to output power with a given polarity based on the input signal.
JP S50 92247 A discloses a multi-ρ electrode welding device, a plurality of electrodes are connected to welding power sources, respectively, through an electronic switch connected in parallel and connected in series, and each of the plurality of the welding power sources is provided so as to generate a respective arc between the base material connected to a neutral point of the front sail welding power source. Alternating opening and closing the switch and the control of the amount of current to be supplied are controlled so as to generate an alternating current between the respective electrodes and the base material.
EP 1 023 965A2 discloses a welding power supply for creating welding current in a succession of current pulses with a maximum current level and a trailing off state which current pulses passing through a series circuit including an inductor and electrode in welding relationship with a workpiece. The power supply has an inverter stage with an input to be connected to a power source, a first terminal at a first electrical polarity when the inverter is on, a second terminal at a second electrical polarity when the inverter is on, and a control to generate an off signal to turn the inverter off and remove current from the terminals to shift said current pulse toward an off state.

### SUMMARY OF THE PRESENT INVENTION

According to a first aspect of the disclosure a welding type system for providing welding type power is described in claim 1.

The welding type system also includes a work inductor connected between the second process output terminal and the shared power circuit, and/or a high frequency starting coil connected between the first process output terminal and the first controllable switch in another alternative.

The first process output terminal is a push and twist style receptacle and provides a stick and/or tig output, and the second process output terminal provides a MIG output, and the process selection input is a user input for selecting mig, tig and/or stick in one embodiment.

The controllable switches are semiconductor devices, electro mechanical devices, and/or vaccuum tubes in various embodiments.

The user input is a selection switch, a selection knob, buttons, a selection menu, a touch screen, and/or a selection program in another alternative.

The process selection input can be responsive to a signal indicative of a working connection being made to at least one of the first process output terminal and the second process output terminal, a trigger, a foot pedal, and/or a finger tip control in various embodiments.

The shared power circuit includes a preregulator with a boost circuit, an inverter and a transformer, with the output of the boost circuit being a boosted bus provided to the inverter, and the output of the inverter provided to the transformer, and the output of the transformer provided to the controllable switches in another alternative.

The welding type system includes a polarity selection input in one embodiment. The first controllable switch and the second controllable switch are connected to receive a first polarity of the welding type power from the shared power circuit. The welding type power circuit further includes third and fourth controllable switches having control inputs, and connected to receive a second polarity of the welding type power from the shared power circuit. The controller receives the polarity selection input and has a polarity selection module responsive to the polarity input. The controller also has third and fourth control outputs having the enable state and the disable state, and being responsive to the polarity selection module. The third and fourth control outputs are connected to the control inputs on the third and fourth switches, respectively. No more than one of the third control output and the fourth control output can be in the enable state at any one time.

The polarity selection input is at least one of a polarity selection switch, a polarity selection knob, buttons, a polarity selection menu, a touch screen, and a selection program in various embodiments.

The first process output terminal is connected to the third controllable switch such that when the third controllable switch is closed the first process output terminal receives the second polarity of the welding type power from the shared power circuit, and the second process output terminal is connected to the fourth controllable switch such that when the fourth controllable switch is closed the second process output terminal receives the second polarity of the welding type power from the shared power circuit in another alternative. Each first control output is responsive to the polarity selection module and the process selection, wherein no more than one of the first control output, the second control output, the third control output, and the fourth control output are in the enable state at one time in this alternative.

The third and fourth controllable switches are semiconductor devices in another alternative.

The third and fourth controllable switches are connected between the shared power circuit and a node common to the first and second controllable switches such that when the first control output and the third control output are enabled the first process output terminal receives the first polarity of the welding type power from the shared power circuit, and when the first control output and the fourth control output are enabled the first process output terminal receives the second polarity of the welding type power from the shared power circuit, and when the second control output and the third control output are enabled the second process output terminal receives the first polarity of the welding type power from the shared power circuit, and when the second control output and the fourth control output are enabled the second process output terminal receives the second polarity of the welding type power from the shared power circuit in one embodiment.

The first switch and the second controllable switch are electro mechanical devices in various embodiments.

According to a second aspect of the disclosure a method of providing welding type power is described in claim 13.

Sensing the process selection input includes sensing a user input indicative of MIG, tig and/or stick in one embodiment.

Sensing the process selection input includes sensing a selection switch, a selection knob, buttons, a selection menu, a touch screen, and /or a selection program in another embodiment.

Sensing the process selection input includes sensing a signal indicative of a working connection being made to at least one of the first process output terminal and the second process output terminal, a trigger, a foot pedal, or a finger tip control in various embodiments.

Other principal features and advantages of will become apparent to those skilled in the art upon review of the following drawings, the detailed description and the appended claims.

### BRIEF DESCRIPTION OF THE DRAWINGS

Figure 1 is a block diagram of a welding type system in accordance with the preferred embodiment;
Figure 2 is a schematic diagram of a switching circuit in accordance with the preferred embodiment;
Figure 3 is a block diagram of a controller in accordance with the preferred embodiment;
Figure 4 is a diagram of a push and twist receptacle;
Figure 5 is a schematic diagram of a switching circuit in accordance with the preferred embodiment;
Figure 6 is a flow chart of part of a controller in accordance with the preferred embodiment;
Figure 7 is a schematic diagram of part of a controller in accordance with the preferred embodiment; and
Figure 8 is a flow chart of part of a controller in accordance with the preferred embodiment

Before explaining at least one embodiment in detail it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting. Like reference numerals are used to indicate like components.

### DETAILED DESCRIPTION OF THE PREFERRED EMBODIMENTS

While the present disclosure will be illustrated with reference to a particular welding type system having particular components and topologies to provide outputs for particular processes, it should be understood at the outset that the invention can also be implemented with other welding type systems, using other components and topologies, and providing other processes.

Generally, a welding type system with two process output terminals is described. A welding-type output is provided across one of the process output terminals and a shared output terminal. A controller in the welding type system automatically provides the output to the corrected process output terminal in response to a process selected on a process selection input. Welding type system , as used herein, includes any device capable of supplying power suitable for welding, plasma cutting, induction heating, CAC-A and/or hot wire welding/preheating (including laser welding and laser cladding), including inverters, converters, choppers, resonant power supplies, quasi-resonant power supplies, etc., as well as control circuitry and other ancillary circuitry associated therewith. Welding type power, as used herein, refers to power suitable for welding, plasma cutting, induction heating, CAC-A and/or hot wire welding/preheating (including laser welding and laser cladding). Process selection input, as used herein, refers to a signal that indicates one of two (or more) processes is a desired process.

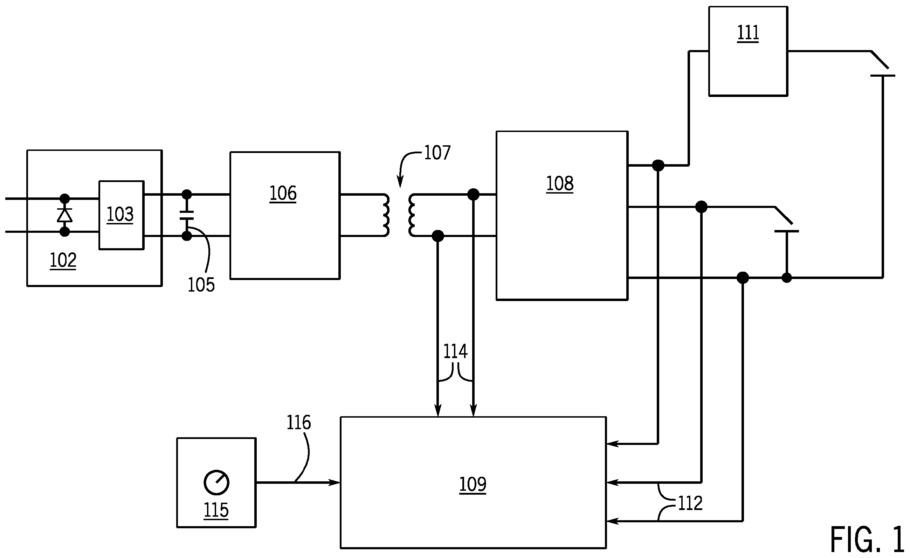

A welding type system 100 shown in Figure 1 includes a preregulator 102, a bus 105, an inverter 106, a transformer 107, a process/polarity switching circuit 108, and controller 109, a wire feeder 111, and a user interface 115. Preregulator 102 includes a rectifier and a boost circuit 103. Boost circuit 103 provides a boosted bus 105 across one or more capacitors. Boosted bus 105 is provided to inverter 106, which inverts and PWMs boosted bus 105 and provides it to the primary of transformer 107. The secondary (or output) of transformer 107 is provided to switching circuit 108, which, as described below, connects the welding type power to a desired output terminal and in some embodiments at a desired polarity. Process/polarity witching circuit, as used herein refers to a circuit that selects a process output terminal and a polarity (or alternates polarity) in response to a logic circuit and a process selection and a polarity selection.

The preferred embodiment provides that preregulator 102, bus 105, inverter 106, and transformer 107 are consistent with the design shown in US Patent Application 2014-0263240. Also, this circuitry is part of a shared power circuit that produces welding type power. Welding type power circuit, as used herein, refers to power circuitry that receives an input power and provides welding-type power. Shared power circuit, as used herein, refers to a portion of a welding type power circuit that provides welding type power for more than one process to more than one output terminal, in addition to a work terminal.

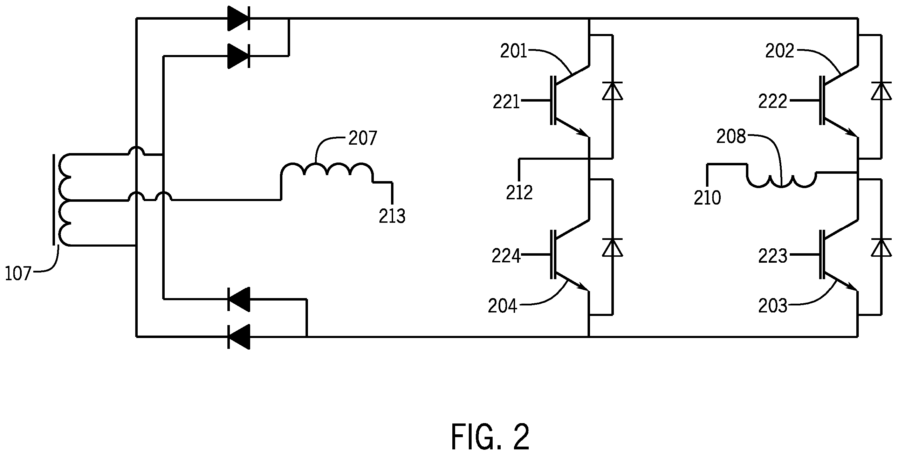

Referring now to Figure 2, the welding type power circuit also includes, in switching circuit 108, four controllable switches 201-. Each switch 201-204 is connected to the output of transformer 107 to receive the welding type power from the shared power circuit. A work inductor 207 is connected between the shared power circuit and a shared output terminal 213. Thus, shared output terminal 213 receives the welding type power through work inductor 207 from the shared power circuit. Work inductor 207 is omitted in various embodiments. Shared output terminal 213 is the work terminal in the preferred embodiment. One alternative provides for two work terminals - one for each process. Controllable switch, as used herein, refers to a switch that can be opened or closed in response to a control input. Switches 201-204 each have a control input 221-224. Connected to, as used herein, refers to an electrical or logical connection made either with or without other components therebetween. In one preferred embodiment the shared output terminal is the work terminal. Connected between, as used herein, refers to an electrical connection made between two components or nodes, either with or without other components therebetween.

A process output terminal 210 is connected to controllable switch 202 such that when switch 202 is closed process output terminal 210 receives positive polarity welding type power from the shared power circuit, and EP welding type power is provided across shared output terminal 213 and process output terminal 210. When controllable switch 202 is open process output terminal 210 does not receive positive EP welding type power from the shared power circuit. Process output terminal 210 is a TIG/stick terminal in the preferred embodiment.

Process output terminal 210 is also connected to controllable switch 203 such that when switch 203 is closed process output terminal 210 receives welding type power from the shared power circuit, and EN welding type power is provided across shared output terminal 213 and process output terminal 210. When controllable switch 203 is open process output terminal 210 does not receive EN welding type power from the shared power circuit.

Switch 201 is connected to process output terminal 212. Process output terminal 212 is a MIG output terminal in the preferred embodiment. Process output terminal 212 is connected to controllable switch 201 such that when switch 201 is closed process output terminal 212 receives positive polarity welding type power from the shared power circuit, and EP welding type power is provided across shared output terminal 213 and process output terminal 212. When controllable switch 201 is open process output terminal 212 does not receive positive EP welding type power from the shared power circuit.

Process output terminal 212 is also connected to controllable switch 204 such that when switch 204 is closed process output terminal 212 receives welding type power from the shared power circuit, and EN welding type power is provided across shared output terminal 213 and process output terminal 212. When controllable switch 204 is open process output terminal 212 does not receive EN welding type power from the shared power circuit.

Thus, by selectively opening and closing switches 201-204 either EP or EN power is provided to one of the two output terminals. Preferably, switches 201-204 are controlled such that no more than one is one at any time. An EP MIG output is provided by having switch 201 on and switches 202-204 off. An EN MIG output is provided by having switch 204 on and switches 201, 202 and 203 off. An AC MIG output can be provided by alternating switches 201 and 204. An EP TIG/stick output is provided by having switch 202 on and switches 201, 203 and 204 off. An EN TIG/stick output is provided by having switch 203 on and switches 201, 202 and 204 off. An AC stick/TIG output is be provided by alternating switches 202 and 203. The on-times of switches 202 and 203 can be adjusted to provide the desired balance. This invention is particularly suitable for ac applications because AC requires output (or steering) switches, and those switches can also be used to select the process. Using the AC steering switch as the process selection switches process does not require the current to flow through any additional device and does not create any additional losses in the system.

Controllable switches 201-204 are semiconductor devices in the preferred embodiment, and are electro mechanical devices or vacuum tubes in alternative embodiments. Various embodiments provide that switches 201-204 are not all the same kind of switches. Electro mechanical device, as used herein, refers to relays or contactors.

Controller 109 is implemented at least partially using software in the preferred embodiment. Alternative embodiments include using discrete circuitry. Controller, as used herein, includes digital and analog circuitry, discrete or integrated circuitry, microprocessors, DSPs, etc., software, hardware and firmware, located on one or more boards, that form part or all of a controller, and are used to control a welding process, or a device such as a power source or wire feeder.

Controller 109 receives a process selection input on line 116. The process selection input is received from a user interface 115 that provides the process selection input as a user input in the preferred embodiment. User interface 115 is a selection switch, a selection knob, buttons, a selection menu, a touch screen, and a selection pro gram in various embodiments. User input, as used herein, refers to a signal responsive to a user selecting a parameter a process, such as selecting current, wire feed speed, MIG, tig or stick. Selection menu, as used herein, refers to a menu that includes choices such as buttons, switches, arrow, etc.

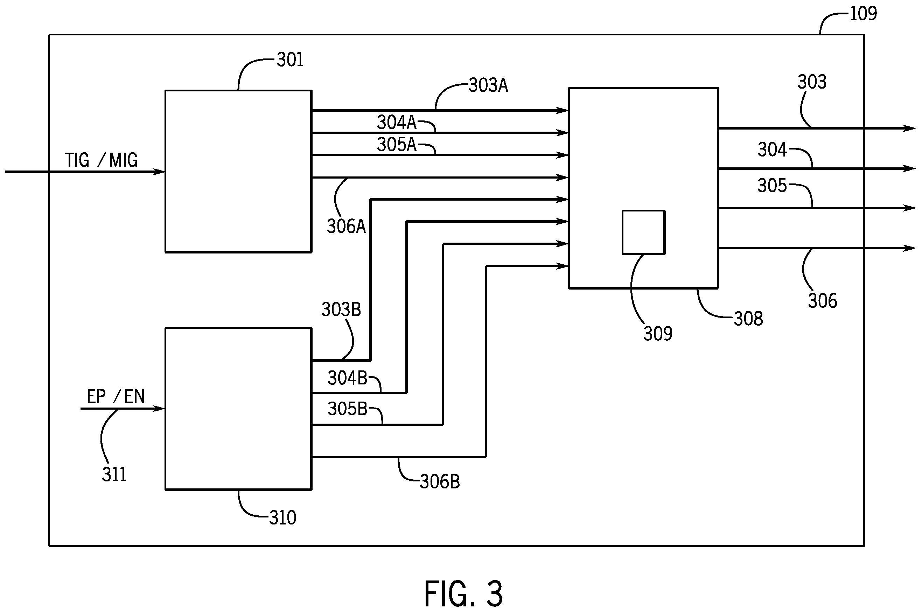

One embodiment of controller 109 is shown in Figure 3, and includes a process selection module 301. The process selection input on line 116 is provided to process selection module 301. Process selection module 301 is responsive to the process selection input on line 116 and has four control outputs 303-306. Each control output 303-306 has an enable state and a disable state, and each control output 303-306 is connected, through a logic circuit 308, to one of control inputs 221-224 of switches 201-204. Logic circuit 308 and process selection module 301 provide that no more than one of the control outputs is in the enable state at any one time. Process selection module, as used herein, refers to a control module that selects one of two (or more) process output terminals to receive welding type power, and selects the remaining process output terminal (or terminals) to not receive welding type power. Control module, as used herein, may be digital or analog, and includes hardware or software, that performs a specified control function. Enable state for a control output, as used herein, refers to a state that enables a switch to be closed or an output to be provided. Disable state for a control output, as used herein, refers to a state that causes a switch to be open or prevents an output from being provided.

The embodiment shown in Figures 2 and 3 is well suited for AC welding or for a welding type system that allows provides either EP or EN power because it includes 4 switches. One alternative omits switches 203 and 204 and provides power to one of process output terminals 210 and 212 in only the EP mode. Another alternative includes switches 203 and 204, but omits switches 201 and 202 to provides power to one of process output terminals 210 and 212 in only the EN mode. In these embodiments logic circuit 308 may be omitted, and control outputs 303 and 304 (or control outputs 305 and 306) may be provided directly to control inputs 221 and 222 (or control inputs 223 and 224) without logic circuit 308 therebetween. The power from transformer 107 may be rectified in the desired polarity. In this embodiment switching circuit 308 is a process selection circuit. Process switching circuit, as used herein refers to a circuit that selects a process output terminal in response to a logic circuit and a process selection and a polarity selection.

Referring back to Figure 2, a high frequency starting coil 208 is shown connected between stick/TIG output terminal 210 and switches 202 and 203, and power from the shared power circuit is provided through coil 208 to output terminal 210. Coil 208 is consistent with prior art high frequency starting coils and can be used to start a TIG or stick weld. Coil 208 is omitted in some embodiments. Coil 208 is only in the active power circuit when the TIG/STICK process and it is not burdening the system when MIG is being performed. Having it in the MIG circuit would reduce the available voltage and create additional losses in the system.

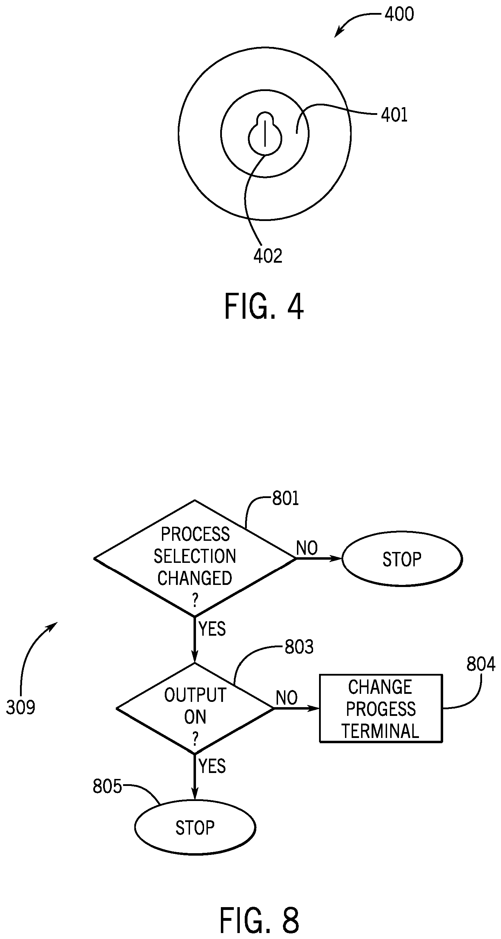

Process output terminal 210 is a Dinse^{™} receptacle in the preferred embodiment, such as receptacle 400 in Figure 4. Receptacle 400 includes a copper receiver 401 having a notch 402. A protrusion on the mating plug is received in notch 402, and pushed past notch 402. Twisting the mating plug then secures the plug in receptacle 400. Alternative embodiments provide that process output terminal 210 is a different kind of push and twist receptacle or other quick connect connection (for example that found in US Patent 7682208), or a non-quick connect such as hard wired. Process output terminal is hard wired to wire feeder 111 in the preferred embodiment, but can be connected using a quick connect connection. Push and twist style receptacle as used herein, refers to a receptacle that receives a cable and wherein the cable is pushed in and held in place by turning the cable, and example include (but are not limited to) a Dinse^{®} connector, a Tweco^{®} connector, or the connector shown in US patent 7682208.

Using a push and twist style receptacle for output terminal 210 is particularly well suited when process output terminal 210 is a stick/TIG terminal. When stick/TIG is one process selection, and MIG the other, user interface 115 allows the user to select the process, and then provides the user input to process selection module 301 to allow the user to select at least one of at least MIG, tig and stick.

An alternative provides for determining the desired process without requiring the user to affirmatively select the process. For example, feedback on lines 112 can be used to determine whether a cable is connected to tig/stick terminal 210. If a working connection is being made to process output terminal 210 then process output terminal 210 is enabled and 212 disabled (using switches 201-204). Conversely, whether or not something connected to terminal 212 could be sensed. Alternatives provide sensing if a trigger, foot pedal, or a finger tip control has been activated by the user. If so, then power is provided to the appropriate process output terminal. Working connection, as used herein, refers to a connection being made to an output terminal that indicates the user intends to use that output terminal, such as connecting a cable to a dinse connector, or connecting a wire feeder to a power supply.

Another alternative provides for a lockout to prevent switching process output terminal while power is being provided (or while a weld is occurring). Logic circuit 308 includes a disable module 309 in this embodiment and according to the invention. Disable module 309 receives feedback indicative of whether a weld is being performed on lines 112. If a weld is being performed, the output process terminal that is not enabled remains not enabled., even if the user changes the process selection. Alternatives include sensing the power being provided in other locations, including in the shared power circuit, for example on lines 114. Disable module, as used herein, refers to a module that disables or locks out a process selection module so that the process elected remains selected even if a process selection input changes.

The preferred embodiment provides for output polarity selection and output process selection and controller 109 includes a polarity selection module 310 that receives a polarity selection input 311. Polarity selection input 311 can be from a user input that selects EP, EN or AC. The user input is a polarity selection switch, a polarity selection knob, buttons, a polarity selection menu, a touch screen, and a selection program in various embodiments. Polarity selection input, as used herein, refers to a signal that indicates a particular polarity output is desired. Polarity selection module, as used herein, refers to a control module that selects the polarity of the output, and can select the polarity to remain at one polarity, or select it to alternate for ac welding.

When AC is selected polarity selection module 310 and can include a balance control to determine the balance between EP and EN, and a cycle length control. Switches 201 and 202 receive EP power, and switches 203 and 204 receive EN power. Thus, when EP is to be provided switches 203 and 204 are disabled by polarity module 310 using control outputs 305 and 306, and when EN is is to be provided switches 201 and 202 are disabled by polarity module 310 using control outputs 303 and 304. Switches 202 and 203 are connected to stick/TIG terminal 210, and switches 201 and 204 are connected to MIG terminal 212. Thus, when stick/TIG is selected switches 201 and 204 are disabled by process selection module 301 using control outputs 303 and 306, and when MIG is selected switches 202 and 203 are disabled by process selection module 301 using control outputs 304 and 305. Logic circuit 308 "ANDS" the enable/disables, leaving no more than one of control outputs 303-306 in the enable state at any one time.

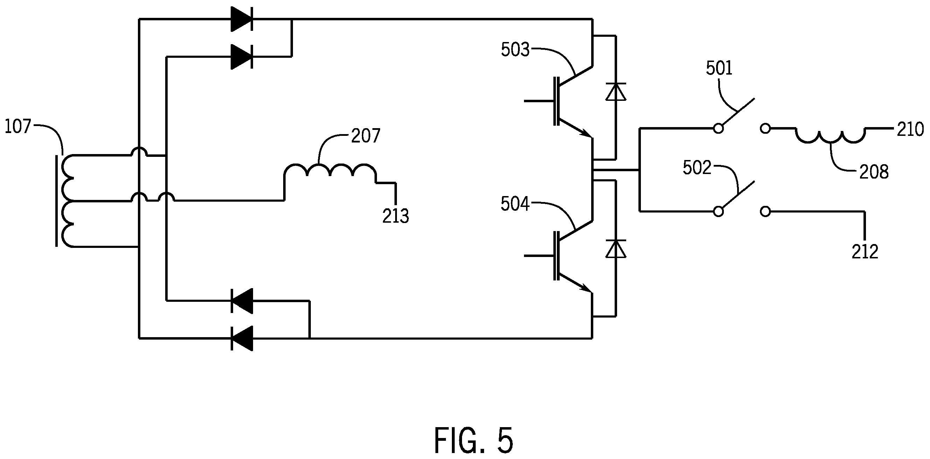

The embodiment of Figure 2 provides that switches 201-204 are each responsive to both polarity selection module 310 and process selection module 301. An alternative shown in Figure 5 provides that two switches responsive to polarity selection module 310 and two other switches are responsive to process selection module 301. In this alternative switches 501 and 502 select which process output terminal will receive power, and switches 503 and 504 steer the output as EP or EN. In this embodiment switches 501 and 502 are electro mechanical devices.

Process selection module 301, polarity selection module 310 and logic circuit 309 can be implemented in software, hardware, or both. The code can be written in any number of ways, and one example, where STICK is the variable indicating stick/TIG is selected and EP is the variable indicating the output is to be EP, is:

```
               IF STICK AND EP
               THEN
                     304 = Enable
                     303, 305, 306 = Disable
               ELSE IF NOT STICK AND EP
               THEN
                     303 = Enable
                     304, 305, 306 = Disable
               ELSE IF STICK AND NOT EP
               THEN
                     305 = Enable
                     303, 304, 306 = Disable
               ELSE IF NOT STICK AND NOT EP
               THEN
                     306 = Enable
                     303, 304, 305 = Disable
               END IF
```

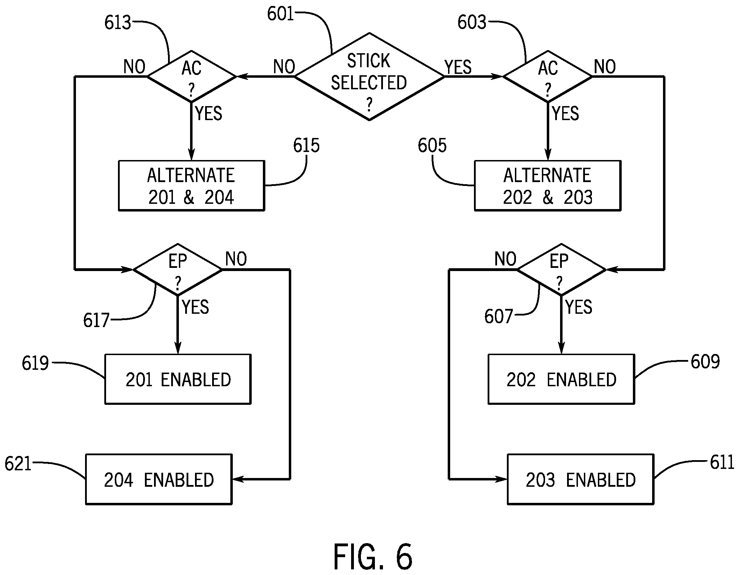

Figure 6 shows a flow chart 601 that can be used to implement modules 301 and 310. At 601 it is determined STICK is true. If STICK is true, then at 603 it is determined if AC is desired. If AC is desired, then switches 202 and 203 are alternated on and off, and switches 201 and 204 are off at step 605. If AC is not desired, then it is determined if EP is desired at 607. If EP is desired, then switch 202 is on and switches 201, 203 and 204 are off at step 609. If EP is not desired, then switch 203 is on and switches 201, 202 and 204 are off at step 611. If stick was not true at 601, then at 613 it is determined if AC is desired. If AC is desired at 613, then switches 201 and 204 are alternated on and off, and switches 202 and 203 are off at step 615. If AC is not desired at step 613, then it is determined if EP is desired at 617. If EP is desired at step 617, then switch 201 is on and switches 202, 203 and 204 are off at step 619. If EP is not desired at step 617, then switch 204 is on and switches 201, 202 and 203 are off at step 621.

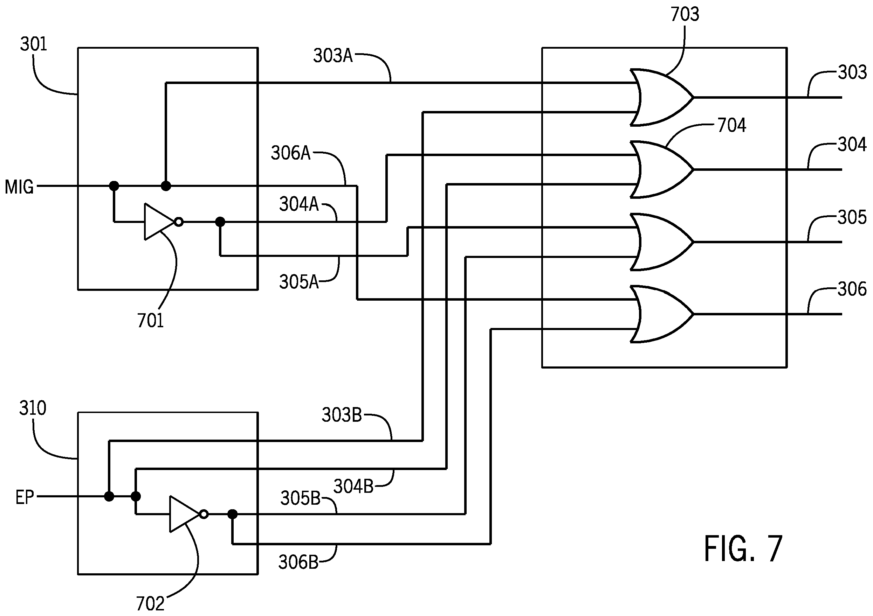

Figure 7 shows a circuit that implements modules 301, 308 and 309. Process selection module 301 receives a signal that is TRUE when MIG is desired. Outputs 303A and 306A are TRUE when MIG is desired, and outputs 304A and 305A are FALSE via NOT gate 701 when MIG is desired. The reverse occurs when stick is desired. Polarity selection module 301 receives a signal that is TRUE when EP is desired. Outputs 303B and 304B are TRUE when EP is desired, and outputs 305B and 306B are FALSE via NOT gate 702 when EP is desired. The reverse occurs true when EN is desired. Logic circuit 308 includes AND gates 703-706 which "AND" the various signals to provide control outputs 303-306.

Figure 8 is a flow chart implementing the lock out feature of disable module 309. This prevents changing output terminal under load. It is determined at 801 if the process selection input has changed. If the process selection input has changed then it is determined at 803 if power is being provided as an output. If power is being provided as an output then no change is made. If power is not being provided, then the active process output terminal is changed at 804.

Controller 109 provides many functions consistent with the prior art, including controlling the output magnitude, wave shape, balance, etc. Those feature can be implemented as they were in the prior art.

## Claims

1. A welding type system (100) for providing welding type power, comprising:
a process selection input;
a welding type power circuit, including a shared power circuit that produces the welding type power, a first controllable switch (202,501) having a first control input (222) connected to receive the welding type power from the shared power circuit, and a second controllable switch (201,502) having a second control input (221) and connected to receive the welding type power from the shared power circuit;
a shared output terminal (213) connected to receive the welding type power from the shared power circuit;
a first process output terminal (210), connected to the first controllable switch (202) such that when the first controllable switch (202,501) is closed the first process output terminal (210) receives the welding type power from the shared power circuit and the welding type power is provided across the shared output terminal (213) and the first process output terminal (210), and such that when the first controllable switch (202,501) is open the first process output terminal (210) does not receive the welding type power from the shared power circuit;
a second process output terminal (212), connected to the second controllable switch (201) such that when the second controllable switch (201,502) is closed the second process output terminal (212) receives the welding type power from the shared power circuit and the welding type power is provided across the shared output terminal (213) and the second process output terminal (212), and such that when the second controllable switch (201,502) is open the second process output terminal (212) does not receive the welding type power from the shared power circuit; and
a controller (109), connected to receive the process selection input, and having a process selection module (301) responsive to the process selection input and having a first control output (303) having an enable state and a disable state, wherein the first control output (303) is connected to the first control input (222), and having a second control output (304) having the enable state and the disable state, wherein the second control output (304) is connected to the second control input (221),
**characterised in that** no more than one of the first control output (303) and the second control output (304) can be in the enable state at any one time
wherein the shared output terminal (213) is a work terminal and
wherein the process selection input includes a disable module responsive to feedback indicative of welding type power being provided to at least one of the first process terminal (210) and the second process terminal (212).

2. The welding type system (100) of claim 1, further comprising at least one of a work inductor (207) connected between the shared output terminal (213) and the shared power circuit, and a high frequency starting coil (208) connected between the first process output (210) terminal and the first controllable switch (202,501).

3. The welding type system (100) of claim 1, wherein:
the first process output terminal (210) is a push and twist style receptacle and the second process output terminal (212) is connectable to a wire feeder (111), and wherein the first process output terminal (210) provides at least one of a stick output and a TIG output, and wherein the second process output terminal (212) provides a MIG output, and wherein the process selection input is a user input for selecting at least one of at least MIG, TIG and stick.

4. The welding type system (100) of claim 1, wherein the process selection input is responsive to at least one of a signal indicative of a working connection being made to at least one of the first process output terminal (210) and the second process output terminal (212), a trigger, a foot pedal, or a finger tip control.

5. The welding type system (100) of claim 1, wherein the first controllable switch (202,501) and the second controllable switch (201,502) are one of semiconductor devices, electro mechanical devices, and vacuum tubes.

6. The welding type system (100) of claim 5, wherein the user input is at least one of a selection switch, a selection knob, buttons, a selection menu, a touch screen, and a selection program.

7. The welding type system (100) of claim 1, further comprising a polarity selection input (311), wherein:
the first controllable switch (202,501) and the second controllable switch (201,502) are connected to receive a first polarity of the welding type power from the shared power circuit;
the welding type power circuit further comprises a third controllable switch (203) having a third control input (223) and connected to receive a second polarity of the welding type power from the shared power circuit, and a fourth controllable switch (204) having a fourth control input (224) and connected to receive the second polarity of the welding type power from the shared power circuit; and
the controller (109) is further connected to receive the polarity selection input (311) and the controller (109) further includes a polarity selection module (310) responsive to the polarity selection input (311), and further having a third control output (305) responsive to the polarity selection module (310) and having the enable state and the disable state, wherein the third control output (305) is connected to the third control input (223), and having a fourth control output (306) responsive to the polarity selection module (310) and having the enable state and the disable state, wherein the fourth output (306) is connected to the fourth control input (224), wherein no more than one of the third control output (305) and the fourth control output (306) can be in the enable state at any one time.

8. The welding type system (100) of claim 7, wherein the polarity selection input (311) is at least one of a polarity selection switch, a polarity selection knob, buttons, a polarity selection menu, a touch screen, and a selection program.

9. The welding type system (100) of claim 7, wherein:
the first process output terminal (210) is connected to the third controllable switch (203) such that when the third controllable switch (203) is closed the first process output terminal (210) receives the second polarity of the welding type power from the shared power circuit;
the second process output terminal (212) is connected to the fourth controllable switch (204) such that when the fourth controllable switch (204) is closed the second process output terminal (212) receives the second polarity of the welding type power from the shared power circuit;
the first control output (303) is responsive to the polarity selection module (310) and the process selection module (301);
the second control output (304) is responsive to the polarity selection module (310) and the process selection module (301);
the third control output (305) is responsive to the polarity selection module (310) and the process selection module (301);
the fourth control output (306) is responsive to the polarity selection module (310) and the process selection module (301); and
wherein no more than one of the first control output (303), the second control output (304), the third control output (305), and the fourth control output (306) are in the enable state at one time.

10. The welding type system (100) of claim 9, wherein the third controllable switch (203) and the fourth controllable switch (204) are semiconductor devices.

11. The welding type system (100) of claim 7, wherein the third controllable switch (503) is connected between the shared power circuit and a node common to the first controllable switch (501) and the second controllable switch (502) and wherein the fourth controllable switch (504) is connected between the shared power circuit and the node common to the first controllable switch (501) and the second controllable switch (502), such that:
when the first control output (303) and the third control output (305) are enabled the first process output terminal (210) receives the first polarity of the welding type power from the shared power circuit;
when the first control output (303) and the fourth control output (306) are enabled the first process output terminal (210) receives the second polarity of the welding type power from the shared power circuit;
when the second control output (304) and the third control output (305) are enabled the second process output terminal (212) receives the first polarity of the welding type power from the shared power circuit; and
when the second control output (304) and the fourth control output (306) are enabled the second process output terminal (212) receives the second polarity of the welding type power from the shared power circuit.

12. The welding type system (100) of claim 11, wherein the first switch (501) and the second controllable switch (502) are electro mechanical devices.

13. A method of providing welding type power, comprising:
providing a welding type system (100) according to one of claims 1-12;
sensing a process selection input; receiving input type power; and
providing welding type power from the shared power circuit across the shared work terminal (213) and only one of the first process terminal (210) and the second process terminal (212) in response to sensing the process selection input, wherein providing welding type power across the shared work terminal (213) and the first process terminal (210) includes closing the first controllable switch (202,501) and opening the second controllable switch (201,502), and wherein providing welding type power across the shared work terminal (213) and the second process terminal (212) includes closing the second controllable switch (201,502) and opening the first controllable switch (202,501)
and wherein the method further comprises preventing changes to the state of the first controllable switch and the second controllable switch while welding power is being provided to one of the first process terminal and the second process terminal.

## Patentansprüche

1. Schweißsystem (100) zum Bereitstellen von Schweißstrom, aufweisend:
einen Prozessauswahleingang;
einen Schweißstromkreis, einschließlich eines gemeinsamen Stromkreises, der den Schweißstrom erzeugt, eines ersten steuerbaren Schalters (202,501) mit einem ersten Steuereingang (222), der so angeschlossen ist, dass er den Schweißstrom von dem gemeinsamen Stromkreis empfängt, und eines zweiten steuerbaren Schalters (201,502) mit einem zweiten Steuereingang (221) und der so angeschlossen ist, dass er den Schweißstrom von dem gemeinsamen Leistungskreis empfängt;
einen gemeinsamen Ausgangsanschluss (213), der so angeschlossen ist, dass er den Schweißstrom von dem gemeinsamen Stromkreis empfängt;
einen ersten Prozessausgangsanschluss (210), der mit dem ersten steuerbaren Schalter (202) verbunden ist, sodass, wenn der erste steuerbare Schalter (202,501) geschlossen ist, der erste Prozessausgangsanschluss (210) den Schweißstrom von dem gemeinsamen Stromkreis empfängt und der Schweißstrom über den gemeinsamen Ausgangsanschluss (213) und den ersten Prozessausgangsanschluss (210) bereitgestellt wird, und sodass, wenn der erste steuerbare Schalter (202,501) offen ist, der erste Prozessausgangsanschluss (210) den Schweißstrom nicht von dem gemeinsamen Leistungskreis empfängt;
einen zweiten Prozessausgangsanschluss (212), der mit dem zweiten steuerbaren Schalter (201) verbunden ist, sodass, wenn der zweite steuerbare Schalter (201,502) geschlossen ist, der zweite Prozessausgangsanschluss (212) den Schweißstrom von dem gemeinsamen Stromkreis empfängt und der Schweißstrom über den gemeinsamen Ausgangsanschluss (213) und den zweiten Prozessausgangsanschluss (212) bereitgestellt wird, und sodass, wenn der zweite steuerbare Schalter (201,502) offen ist, der zweite Prozessausgangsanschluss (212) den Schweißstrom nicht von dem gemeinsamen Stromkreis empfängt; und
eine Steuerung (109), die so angeschlossen ist, dass sie den Prozessauswahleingang empfängt, und ein Prozessauswahlmodul (301) aufweist, das auf den Prozessauswahleingang anspricht und einen ersten Steuerausgang (303) mit einem Freigabezustand und einem Sperrzustand aufweist, wobei der erste Steuerausgang (303) mit dem ersten Steuereingang (222) verbunden ist und einen zweiten Steuerausgang (304) mit dem Freigabezustand und dem Sperrzustand aufweist, wobei der zweite Steuerausgang (304) mit dem zweiten Steuereingang (221) verbunden ist,
**dadurch gekennzeichnet, dass** nicht mehr als einer von dem ersten Steuerausgang (303) und dem zweiten Steuerausgang (304) gleichzeitig im Freigabezustand sein kann,
wobei der gemeinsame Ausgangsanschluss (213) ein Arbeitsanschluss ist und
wobei der Prozessauswahleingang ein Deaktivierungsmodul beinhaltet, das auf eine Rückmeldung anspricht, die angibt, dass der Schweißstrom mindestens einem von dem ersten Prozessanschluss (210) und dem zweiten Prozessanschluss (212) zugeführt wird.

2. Schweißsystem (100) nach Anspruch 1, ferner aufweisend mindestens einen Arbeitsinduktor (207), der zwischen dem gemeinsamen Ausgangsanschluss (213) und dem gemeinsamen Stromkreis angeschlossen ist, und/oder eine Hochfrequenzstartspule (208), die zwischen dem ersten Prozessausgangsanschluss (210) und dem ersten steuerbaren Schalter (202,501) angeschlossen ist.

3. Schweißsystem (100) nach Anspruch 1, wobei:
der erste Prozessausgangsanschluss (210) eine Druck-und-Dreh-Steckbuchse ist und der zweite Prozessausgangsanschluss (212) mit einem Drahtvorschubgerät (111) verbindbar ist, und wobei der erste Prozessausgangsanschluss (210) mindestens einen von einem Stabausgang und einem WIG-Ausgang bereitstellt, und wobei der zweite Prozessausgangsanschluss (212) einen MIG-Ausgang bereitstellt, und wobei der Prozessauswahleingang eine Benutzereingabe zum Auswählen von mindestens einem von mindestens MIG, WIG und Stab ist.

4. Schweißsystem (100) nach Anspruch 1, wobei der Prozessauswahleingang auf mindestens eines von einem Signal, das angibt, dass eine Arbeitsverbindung mit mindestens einem von dem ersten Prozessausgangsanschluss (210) und dem zweiten Prozessausgangsanschluss (212) hergestellt wird, einem Auslöser, einem Fußpedal oder einer Fingerspitzensteuerung anspricht.

5. Schweißsystem (100) nach Anspruch 1, wobei der erste steuerbare Schalter (202,501) und der zweite steuerbare Schalter (201,502) Halbleitervorrichtungen, elektromechanische Vorrichtungen oder Vakuumröhren sind.

6. Schweißsystem (100) nach Anspruch 5, wobei die Benutzereingabe mindestens eines von einem Auswahlschalter, einem Auswahlknopf, Tasten, einem Auswahlmenü, einem Berührungsbildschirm und einem Auswahlprogramm ist.

7. Schweißsystem (100) nach Anspruch 1, ferner aufweisend einen Polaritätsauswahleingang (311), wobei:
der erste steuerbare Schalter (202,501) und der zweite steuerbare Schalter (201,502) so verbunden sind, dass sie eine erste Polarität des Schweißstroms von dem gemeinsamen Stromkreis empfangen;
der Schweißstromkreis ferner einen dritten steuerbaren Schalter (203), der einen dritten Steuereingang (223) umfasst und verbunden ist, um eine zweite Polarität des Schweißstroms von dem gemeinsamen Stromkreis zu empfangen, und einen vierten steuerbaren Schalter (204), der einen vierten Steuereingang (224) umfasst und verbunden ist, um die zweite Polarität des Schweißstroms von dem gemeinsamen Stromkreis zu empfangen, aufweist; und
die Steuerung (109) ferner so verbunden ist, dass sie den Polaritätsauswahleingang (311) empfängt, und die Steuerung (109) ferner ein Polaritätsauswahlmodul (310) umfasst, das auf den Polaritätsauswahleingang (311) anspricht, und ferner einen dritten Steuerausgang (305) aufweist, der auf das Polaritätsauswahlmodul (310) anspricht und den Freigabezustand und den Sperrzustand aufweist, wobei der dritte Steuerausgang (305) mit dem dritten Steuereingang (223) verbunden ist, und einen vierten Steuerausgang (306) aufweist, der auf das Polaritätsauswahlmodul (310) anspricht und den Freigabezustand und den Sperrzustand aufweist, wobei der vierte Steuerausgang (306) mit dem vierten Steuereingang (224) verbunden ist, wobei nicht mehr als einer von dem dritten Steuerausgang (305) und dem vierten Steuerausgang (306) gleichzeitig im Freigabezustand sein kann.

8. Schweißsystem (100) nach Anspruch 7, wobei der Polaritätsauswahleingang (311) mindestens eines von einem Polaritätsauswahlschalter, einem Polaritätsauswahlknopf, Tasten, einem Polaritätsauswahlmenü, einem Berührungsbildschirm und einem Auswahlprogramm ist.

9. Schweißsystem (100) nach Anspruch 7, wobei:
der erste Prozessausgangsanschluss (210) mit dem dritten steuerbaren Schalter (203) verbunden ist, sodass, wenn der dritte steuerbare Schalter (203) geschlossen ist, der erste Prozessausgangsanschluss (210) die zweite Polarität des Schweißstroms von dem gemeinsamen Stromkreis empfängt;
der zweite Prozessausgangsanschluss (212) mit dem vierten steuerbaren Schalter (204) verbunden ist, sodass, wenn der vierte steuerbare Schalter (204) geschlossen ist, der zweite Prozessausgangsanschluss (212) die zweite Polarität des Schweißstroms von dem gemeinsamen Stromkreis empfängt;
der erste Steuerausgang (303) auf das Polaritätsauswahlmodul (310) und das Prozessauswahlmodul (301) anspricht;
der zweite Steuerausgang (304) auf das Polaritätsauswahlmodul (310) und das Prozessauswahlmodul (301) anspricht;
der dritte Steuerausgang (305) auf das Polaritätsauswahlmodul (310) und das Prozessauswahlmodul (301) anspricht;
der vierte Steuerausgang (306) auf das Polaritätsauswahlmodul (310) und das Prozessauswahlmodul (301) anspricht; und
wobei sich zu einem Zeitpunkt nicht mehr als einer des ersten Steuerausgangs (303), des zweiten Steuerausgangs (304), des dritten Steuerausgangs (305) und des vierten Steuerausgangs (306) im Freigabezustand befindet.

10. Schweißsystem (100) nach Anspruch 9, wobei der dritte steuerbare Schalter (203) und der vierte steuerbare Schalter (204) Halbleitervorrichtungen sind.

11. Schweißsystem (100) nach Anspruch 7, wobei der dritte steuerbare Schalter (503) zwischen dem gemeinsamen Stromkreis und einem Knoten, der dem ersten steuerbaren Schalter (501) und dem zweiten steuerbaren Schalter (502) gemeinsam ist, verbunden ist, und wobei der vierte steuerbare Schalter (504) zwischen dem gemeinsamen Stromkreis und dem Knoten, der dem ersten steuerbaren Schalter (501) und dem zweiten steuerbaren Schalter (502) gemeinsam ist, verbunden ist, sodass:
wenn der erste Steuerausgang (303) und der dritte Steuerausgang (305) aktiviert sind, der erste Prozessausgangsanschluss (210) die erste Polarität des Schweißstroms von dem gemeinsamen Stromkreis empfängt;
wenn der erste Steuerausgang (303) und der vierte Steuerausgang (306) aktiviert sind, der erste Prozessausgangsanschluss (210) die zweite Polarität des Schweißstroms von dem gemeinsamen Stromkreis empfängt;
wenn der zweite Steuerausgang (304) und der dritte Steuerausgang (305) aktiviert sind, der zweite Prozessausgangsanschluss (212) die erste Polarität des Schweißstroms von dem gemeinsamen Stromkreis empfängt; und
wenn der zweite Steuerausgang (304) und der vierte Steuerausgang (306) aktiviert sind, der zweite Prozessausgangsanschluss (212) die zweite Polarität des Schweißstroms von dem gemeinsamen Stromkreis empfängt.

12. Schweißsystem (100) nach Anspruch 11, wobei der erste Schalter (501) und der zweite steuerbare Schalter (502) elektromechanische Vorrichtungen sind.

13. Verfahren zum Bereitstellen von Schweißstrom, aufweisend:
Bereitstellen eines Schweißsystems (100) nach einem der Ansprüche 1-12;
Erfassen eines Prozessauswahleingangs;
Empfangen von Eingangsleistung; und
Bereitstellen von Schweißstrom von dem gemeinsamen Stromkreis über den gemeinsamen Arbeitsanschluss (213) und nur einen von dem ersten Prozessanschluss (210) und dem zweiten Prozessanschluss (212) in Reaktion auf das Erfassen des Prozessauswahleingangs, wobei das Bereitstellen von Schweißstrom über den gemeinsamen Arbeitsanschluss (213) und den ersten Prozessanschluss (210) ein Schließen des ersten steuerbaren Schalters (202,501) und ein Öffnen des zweiten steuerbaren Schalters (201,502) umfasst, und wobei das Bereitstellen von Schweißstrom über den gemeinsamen Arbeitsanschluss (213) und den zweiten Prozessanschluss (212) ein Schließen des zweiten steuerbaren Schalters (201,502) und ein Öffnen des ersten steuerbaren Schalters (202,501) umfasst
und wobei das Verfahren ferner das Verhindern von Änderungen des Zustands des ersten steuerbaren Schalters und des zweiten steuerbaren Schalters aufweist, während Schweißstrom entweder dem ersten Prozessanschluss oder dem zweiten Prozessanschluss bereitgestellt wird.

## Revendications

1. Système de type soudage (100) pour la fourniture d'une alimentation de type soudage, comprenant :
une entrée de sélection de processus ;
un circuit d'alimentation de type soudage, comprenant un circuit d'alimentation partagé qui produit l'alimentation de type soudage, un premier commutateur commandable (202,501) ayant une première entrée de commande (222) connectée pour recevoir l'alimentation de type soudage à partir du circuit d'alimentation partagé, et un deuxième commutateur commandable (201,502) ayant une deuxième entrée de commande (221) et connecté pour recevoir l'alimentation de type soudage à partir du circuit d'alimentation partagé ;
une borne de sortie partagée (213) connectée pour recevoir l'alimentation de type soudage à partir du circuit d'alimentation partagé ;
une première borne de sortie de processus (210), connectée au premier commutateur commandable (202) de telle sorte que, lorsque le premier commutateur commandable (202,501) est fermé, la première borne de sortie de processus (210) reçoit l'alimentation de type soudage à partir du circuit d'alimentation partagé et l'alimentation de type soudage est fournie à la borne de sortie partagée (213) et à la première borne de sortie de processus (210), et de telle sorte que, lorsque le premier commutateur commandable (202,501) est ouvert, la première borne de sortie de processus (210) ne reçoit pas l'alimentation de type soudage à partir du circuit d'alimentation partagé ;
une deuxième borne de sortie de processus (212), connectée au deuxième commutateur commandable (201) de telle sorte que, lorsque le deuxième commutateur commandable (201,502) est fermé, la deuxième borne de sortie de processus (212) reçoit l'alimentation de type soudage à partir du circuit d'alimentation partagé et l'alimentation de type soudage est fournie à la borne de sortie partagée (213) et à la deuxième borne de sortie de processus (212), et de telle sorte que, lorsque le deuxième commutateur commandable (201,502) est ouvert, la deuxième borne de sortie de processus (212) ne reçoit pas l'alimentation de type soudage à partir du circuit d'alimentation partagé ; et
un dispositif de commande (109), connecté pour recevoir l'entrée de sélection de processus, et ayant un module de sélection de processus (301) réactif à l'entrée de sélection de processus et ayant une première sortie de commande (303) ayant un état d'activation et un état de désactivation, dans lequel la première sortie de commande (303) est connectée à la première entrée de commande (222), et ayant une deuxième sortie de commande (304) ayant l'état d'activation et l'état de désactivation, dans lequel la deuxième sortie de commande (304) est connectée à la deuxième entrée de commande (221),
**caractérisé en ce que** pas plus de l'une de la première sortie de commande (303) et de la deuxième sortie de commande (304) ne peut être dans l'état d'activation à un instant quelconque
dans lequel la borne de sortie partagée (213) est une borne de travail et
dans lequel l'entrée de sélection de processus comporte un module de désactivation réactif à une rétroaction indicative de la fourniture d'alimentation de type soudage à au moins l'une de la première borne de processus (210) et de la deuxième borne de processus (212).

2. Système de type soudage (100) selon la revendication 1, comprenant en outre un inducteur de travail (207) connecté entre la borne de sortie partagée (213) et le circuit d'alimentation partagé, et/ou une bobine de démarrage haute fréquence (208) connectée entre la première borne de sortie de processus (210) et le premier commutateur commandable (202,501).

3. Système de type soudage (100) selon la revendication 1, dans lequel :
la première borne de sortie de processus (210) est un réceptacle de type pousser-tourner et la deuxième borne de sortie de processus (212) peut être connectée à un dispositif d'apport de fil (111), et dans lequel la première borne de sortie de processus (210) fournit une sortie stick et/ou une sortie TIG, et dans lequel la deuxième borne de sortie de processus (212) fournit une sortie MIG, et dans lequel l'entrée de sélection de processus est une entrée d'utilisateur destinée à sélectionner au moins l'un parmi MIG, TIG et stick.

4. Système de type soudage (100) selon la revendication 1, dans lequel l'entrée de sélection de processus est réactive à au moins l'un parmi un signal indicatif d'une connexion de travail en train d'être réalisée à la première borne de sortie de processus (210) et/ou la deuxième borne de sortie de processus (212), un déclencheur, une pédale ou une commande du bout du doigt.

5. Système de type soudage (100) selon la revendication 1, dans lequel le premier commutateur commandable (202,501) et le deuxième commutateur commandable (201,502) sont les uns parmi des dispositifs à semi-conducteurs, des dispositifs électromécaniques et des tubes à vide.

6. Système de type soudage (100) selon la revendication 5, dans lequel l'entrée d'utilisateur est au moins un élément parmi un commutateur de sélection, une molette de sélection, des boutons, un menu de sélection, un écran tactile, et un programme de sélection.

7. Système de type soudage (100) selon la revendication 1, comprenant en outre une entrée de sélection de polarité (311), dans lequel :
le premier commutateur commandable (202,501) et le deuxième commutateur commandable (201,502) sont connectés pour recevoir une première polarité de l'alimentation de type soudage à partir du circuit d'alimentation partagé ;
le circuit d'alimentation de type soudage comprend en outre un troisième commutateur commandable (203) ayant une troisième entrée de commande (223) et connecté pour recevoir une deuxième polarité de l'alimentation de type soudage à partir du circuit d'alimentation partagé, et un quatrième commutateur commandable (204) ayant une quatrième entrée de commande (224) et connecté pour recevoir la deuxième polarité de l'alimentation de type soudage à partir du circuit d'alimentation partagé ; et
le dispositif de commande (109) est en outre connecté pour recevoir l'entrée de sélection de polarité (311) et le dispositif de commande (109) comporte en outre un module de sélection de polarité (310) réactif à l'entrée de sélection de polarité (311), et ayant en outre une troisième sortie de commande (305) réactive au module de sélection de polarité (310) et ayant l'état d'activation et l'état de désactivation, dans lequel la troisième sortie de commande (305) est connectée à la troisième entrée de commande (223), et ayant une quatrième sortie de commande (306) réactive au module de sélection de polarité (310) et ayant l'état d'activation et l'état de désactivation, dans lequel la quatrième sortie (306) est connectée à la quatrième entrée de commande (224), dans lequel pas plus de l'une de la troisième sortie de commande (305) et de la quatrième sortie de commande (306) ne peut être dans l'état d'activation à un instant quelconque.

8. Système de type soudage (100) selon la revendication 7, dans lequel l'entrée de sélection de polarité (311) est au moins un élément parmi un commutateur de sélection de polarité, une molette de sélection de polarité, des boutons, un menu de sélection de polarité, un écran tactile, et un programme de sélection.

9. Système de type soudage (100) selon la revendication 7, dans lequel :
la première borne de sortie de processus (210) est connectée au troisième commutateur commandable (203) de telle sorte que lorsque le troisième commutateur commandable (203) est fermé, la première borne de sortie de processus (210) reçoit la deuxième polarité de l'alimentation de type soudage à partir du circuit d'alimentation partagé ;
la deuxième borne de sortie de processus (212) est connectée au quatrième commutateur commandable (204) de telle sorte que lorsque le quatrième commutateur commandable (204) est fermé, la deuxième borne de sortie de processus (212) reçoit la deuxième polarité de l'alimentation de type soudage à partir du circuit d'alimentation partagé ;
la première sortie de commande (303) est réactive au module de sélection de polarité (310) et au module de sélection de processus (301) ;
la deuxième sortie de commande (304) est réactive au module de sélection de polarité (310) et au module de sélection de processus (301) ;
la troisième sortie de commande (305) est réactive au module de sélection de polarité (310) et au module de sélection de processus (301) ;
la quatrième sortie de commande (306) est réactive au module de sélection de polarité (310) et au module de sélection de processus (301) ; et
dans lequel pas plus de l'une parmi la première sortie de commande (303), la deuxième sortie de commande (304), la troisième sortie de commande (305), et la quatrième sortie de commande (306) n'est dans l'état activé à un instant donné.

10. Système de type soudage (100) selon la revendication 9, dans lequel le troisième commutateur commandable (203) et le quatrième commutateur commandable (204) sont des dispositifs à semi-conducteurs.

11. Système de type soudage (100) selon la revendication 7, dans lequel le troisième commutateur commandable (503) est connecté entre le circuit d'alimentation partagé et un nœud commun au premier commutateur commandable (501) et au deuxième commutateur commandable (502) et dans lequel le quatrième commutateur commandable (504) est connecté entre le circuit d'alimentation partagé et le nœud commun au premier commutateur commandable (501) et au deuxième commutateur commandable (502), de telle sorte que :
lorsque la première sortie de commande (303) et la troisième sortie de commande (305) sont activées, la première borne de sortie de processus (210) reçoit la première polarité de l'alimentation de type soudage à partir du circuit d'alimentation partagé ;
lorsque la première sortie de commande (303) et la quatrième sortie de commande (306) sont activées, la première borne de sortie de processus (210) reçoit la deuxième polarité de l'alimentation de type soudage à partir du circuit d'alimentation partagé ;
lorsque la deuxième sortie de commande (304) et la troisième sortie de commande (305) sont activées, la deuxième borne de sortie de processus (212) reçoit la première polarité de l'alimentation de type soudage à partir du circuit d'alimentation partagé ; et
lorsque la deuxième sortie de commande (304) et la quatrième sortie de commande (306) sont activées, la deuxième borne de sortie de processus (212) reçoit la deuxième polarité de l'alimentation de type soudage à partir du circuit d'alimentation partagé.

12. Système de type soudage (100) selon la revendication 11, dans lequel le premier commutateur (501) et le second commutateur commandable (502) sont des dispositifs électromécaniques.

13. Procédé de fourniture d'une alimentation de type soudage, comprenant :
la fourniture d'un système de type soudage (100) selon l'une des revendications 1 à 12 ;
la détection d'une entrée de sélection de processus ;
la réception d'une alimentation de type entrée ; et
la fourniture d'une alimentation de type soudage à partir du circuit d'alimentation partagé à la borne de travail partagée (213) et à une seule parmi la première borne de processus (210) et la deuxième borne de processus (212) en réponse à la détection de l'entrée de sélection de processus, dans lequel la fourniture d'alimentation de type soudage entre la borne de travail partagée (213) et la première borne de processus (210) comporte la fermeture du premier commutateur commandable (202,501) et l'ouverture du deuxième commutateur commandable (201,502), et dans lequel la fourniture d'alimentation de type soudage entre la borne de travail partagée (213) et la deuxième borne de processus (212) comporte la fermeture du deuxième commutateur commandable (201,502) et l'ouverture du premier commutateur commandable (202,501)
et dans lequel le procédé comprend en outre le fait d'empêcher des changements de l'état du premier commutateur commandable et du deuxième commutateur commandable tandis que l'alimentation de soudage est fournie à l'une parmi la première borne de processus et la deuxième borne de processus.
